(19) Europäisches Patentamt
European Patent Office
Office européen des brevets

(11) Veröffentlichungsnummer: **0 320 719 B1**

(12) **EUROPÄISCHE PATENTSCHRIFT**

(45) Veröffentlichungstag der Patentschrift: **08.01.92**

(51) Int. Cl.⁵: **C09D 133/06**, C08F 212/08, C08F 220/32

(21) Anmeldenummer: **88120163.6**

(22) Anmeldetag: **02.12.88**

(54) **Bindemittel, Verfahren zu dessen Herstellung und dessen Verwendung in klaren oder pigmentierten Überzugsmitteln.**

(30) Priorität: 02.12.87 DE 3740774

(43) Veröffentlichungstag der Anmeldung:
21.06.89 Patentblatt 89/25

(45) Bekanntmachung des Hinweises auf die Patenterteilung:
08.01.92 Patentblatt 92/02

(84) Benannte Vertragsstaaten:
AT BE CH DE ES FR GB GR IT LI NL SE

(56) Entgegenhaltungen:
DE-B- 2 626 900
FR-A- 2 307 012

(73) Patentinhaber: **Herberts Gesellschaft mit beschränkter Haftung**
**Christbusch 25**
**W-5600 Wuppertal 2(DE)**

(72) Erfinder: **Bederke, Klaus, Dr.**
**Oststrasse 36**
**W-4322 Sprockhövel(DE)**
Erfinder: **Kerber, Hermann**
**Daniel-Schürmann-Weg 37**
**W-5600 Wuppertal 21(DE)**
Erfinder: **Krumme, Manfred**
**Matthias-Curt-Strasse 27**
**W-5042 Erftstadt(DE)**
Erfinder: **Sadowski, Fritz, Dr.**
**Am Mühlengraben 35**
**W-5024 Brauweiler bei Köln(DE)**
Erfinder: **Werner, Stephan**
**Jägerhofstrasse 25**
**W-5600 Wuppertal 1(DE)**

(74) Vertreter: **Türk, Gille, Hrabal**
**Brucknerstrasse 20**
**W-4000 Düsseldorf 13(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Bindemittel, enthaltend hydroxylgruppenhaltige Copolymerisate auf der Basis von Additionsprodukten α,ß-ungesättigter Säuren mit Glycidylestern und damit mischpolymerisierbarer α,ß-ungesättigterMonomerer mit und ohne Hydroxylgruppen. Sie betrifft auch die Herstellung derartiger hydroxylgruppenhaltiger Copolymerisate und deren Verwendung in klaren oder pigmentierten Überzugsmitteln.

Hydroxylgruppenhaltige Copolymerisate auf der Basis von (Meth)acrylaten und Umsetzungsprodukten aus Acrylsäure und Glycidylestern von α, Alkylalkan-monocarbonsäuren und/oder α,α-Dialkylalkanmonocarbonsäuren, die mit organischen Polyisocyanaten zu überzugsmitteln verarbeitet werden können, sind bekannt. In der DE-AS 16 68 510 werden Copolymerisate aus Additionsprodukten α,ß-ethylenisch ungesättigter Säuren mit Glycidylestern und damit mischpolymerisierbaren α,ß-ungesättigten Monomeren mit und ohne Hydroxylgruppen beschrieben. Die DE-PS 26 03 259 gibt Reaktionslacke an, die spezielle Bindemittel der in der DE-AS 16 68 510 allgemein beschriebenen Art enthalten. Es handelt sich um Mischpolymerisate auf der Basis von Styrol, Methylmethacrylat, Hydroxyethylmethacrylat, Acrylsäure und Glycidylestern von α-Alkylalkan-monocarbonsäuren und/oder α,α-Dialkylalkanmonocarbonsäuren, die durch Erhitzen unter gleichzeitiger Veresterung und Polymerisation in inerten Lösemitteln in Anwesenheit von Polymerisationsinitiatoren, gegebenenfalls mit Kettenabbrechern erhalten werden. Diese bekannten überzugsmittel liefern zwar lösemittel-, wasser- und wetterbeständige Filme. Bei Raumtemperatur oder niedrigeren Temperaturen getrocknet, weisen derartige Filme jedoch keine ausreichende Oberflächenhärte auf. Diese negative Eigenschaft macht sich besonders bemerkbar bei der Verwendung für Ausbesserungslackierungen von Kraftfahrzeugkarossen in den Wintermonaten. Selbst bei forciert (30 Minuten,60°C) getrockneten Lackfilmen wird die Montagefestigkeit erst nach 4 Stunden erreicht. Ferner tritt bei der Lackierung von Kraftfahrzeugkarossen an scharfen Kanten eine Kantenflucht auf. In Mulden und Sikken ist die Fülle derartiger Reaktionslacke nicht ausreichend.

Aufgabe der Erfindung ist daher die Bereitstellung von Bindemitteln bzw. klaren oder pigmentierten Überzugsmitteln, die zu Überzügen mit hohem Glanz, guter Fülle, gutem Verlauf und einer verbesserten Verarbeitungssicherheit führen.

Es hat sich gezeigt, daß diese Aufgabe durch die Bereitstellung eines Bindemittels gelöst wird, das ein hydroxylgruppenhaltiges Copolymerisat auf der Basis von Additionsprodukten α,ß-ungesättigter Säuren mit Glycidylestern und damit mischpolymerisierbaren α,ß-ungesättigten Monomeren mit und ohne Hydroxylgruppen enthält, und das dadurch gekennzeichnet ist, daß es im wesentlichen aus einem hydroxylgruppenhaltigen Copolymerisat besteht, das erhältlich ist aus

a) 24.5 bis 30.0 Gew.-% Styrol,
b) 12.0 bis 15.0 Gew.-% tert.-Butylacrylat,
c) 4.0 bis 7.0 Gew. % iso-Butylmethacrylat,
d) 6.0 bis 9.0 Gew.-% 2-Ethylhexylmethacrylat,
e) 14.0 bis 17.0 Gew.-% 2-Hydroxypropylmethacrylat,
f) 10.0 bis 13.0 Gew.-% Butandiol-1,4-monoacrylat,
g) 4.0 bis 5.0 Gew.-% Acrylsäure,
h) 13.0 bis 15.5 Gew.-% Glycidylester von α-Alkylalkan-monocarbonsäuren und/oder α,α-Dialkylalkanmonocarbonsäuren,

wobei sich die Summe der Zahlenwerte der Komponenten a) bis h) jeweils auf 100 % ergänzt.

Es hat sich gezeigt, daß ein derartiges Bindemittel beim Einsatz mit zwei- und/oder mehrwertigen Polyisocyanaten einen im Vergleich mit dem Stand der Technik, wie er sich aus der DE-AS 16 68 510 und insbe- sondere aus der DE-PS 26 03 259 ergibt, erhöhten Festkörpergehalt bei vergleichbarer Viskosität bzw. eine erniedrigte Viskosität bei gleichem Festkörpergehalt ergibt. Es weist darüber hinaus lacktechnische Vorteile, wie verbesserten Glanz, Fülle, Verlauf, Verarbeitungssicherheit bei High Solid-Gehalt auf.

Die Herstellung des erfindungsgemäßen Copolymerisats kann durch Polymerisation nach üblichen Verfahren, z.B. der Substanz- oder der Lösungspolymerisation durchgeführt werden. Diese Polymerisationsverfahren sind gut bekannt und beschrieben in: Houben-Weyl, Methoden der Organischen Chemie, 4. Aufl., Band 14/1, S. 24-255 (1961).

Das Lösungspolymerisationsverfahren wird für die Herstellung des erfindungsgemäßen Copolymerisats bevorzugt. Bei diesem Verfahren werden die Lösemittel und die Glycidylester von α-Alkylalkan- und/oder α,α-Dialkylalkanmonocarbonsäuren in das Reaktionsgefäß vorgelegt, auf Siedetemperatur geheizt und das Gemisch aus Monomeren und Initiator kontinuierlich in einer bestimmten Zeit zudosiert.

Die Polymerisation wird bei Temperaturen zwischen 100°C und 160°C, vorzugsweise bei 130°C bis 150°C durchgeführt.

Die Polymerisationsreaktion wird mit bekannten Polymerisationsinitiatoren gestartet. Geeignete Initiato-

EP 0 320 719 B1

ren sind z.B. Peroxide, die in einer Reaktion 1. Ordnung thermisch in Radikale zerfallen. Initiatorart und -menge werden so gewählt, daß bei der Polymerisationstemperatur während der Zulaufphase ein möglichst konstantes Radikalangebot vorliegt.

Bevorzugt eingesetzte Initiatoren für die Polymerisation sind:

Dialkylperoxide, wie Di-tert.-Butylperoxid, Di-cumylperoxid; Hydroperoxide, wie Cumolhydroperoxid, tert.-Butylhydroperoxid; Perester, wie tert.-Butyl-perbenzoat, tert.-Butyl-perpivalat, tert.-Butyl-per-3,5,5-trimethylhexanoat, tert.-Butyl-per-2-ethyl-hexanoat.

Die Polymerisationsinitiatoren, insbesondere Di-tert.-butylperoxid und tert.-Butylperbenzoat werden bevorzugt in einer Menge von 0,1 bis 2 Gew.-%, bezogen auf die Monomeren-Einwaage zugesetzt.

Zur Regelung des Molekulargewichts können Kettenüberträger mitverwendet werden. Beispiele sind Mercaptane, Thioglykolsäureester, Chlorkohlenwasserstoffe.

Die Polymerisationsbedingungen (Reaktionstemperatur, Zulaufzeit der Monomerenmischung, Lösungskonzentration werden so eingerichtet, daß die erfindungsgemäß hergestellten Copolymerisate ein zahlenmittleres Molekulargewicht (bestimmt durch Gelpermeationschromatographie unter Verwendung von Polystyrol als Eichsubstanz) zwischen 2000 und 20000 aufweisen.

Als Lösemittel können übliche inerte Lösemittel für die Lösungspolymerisation eingesetzt werden. Bevorzugt eignen sich solche organischen Lösemittel, die dann später auch in den fertigen Überzugsmitteln eingesetzt werden. Beispiele für solche Lösemittel sind: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; und Ketone, wie Methylethylketon, Methylisobutylketon, Diisobutylketon, Cyclohexanon, Isophoron. Aromatische Kohlenwasserstoffe, wie Xylol, Solvesso 100 (eingetragenes Warenzeichen für aromatische Kohlenwasserstoffgemische) und aliphatische Kohlenwasserstoffe können ebenfalls im Verschnitt mit den oben genannten Lösemitteln eingesetzt werden.

Als Komponente h) werden zur Herstellung der erfindungsgemäß eingesetzten hydroxylgruppenhaltigen Copolymerisate Glycidylester von $\alpha$-Alkylalkanmonocarbonsäuren und/oder $\alpha,\alpha$-Dialkylalkanmonocarbonsäuren eingesetzt. Bevorzugt handelt es sich um solche der Summenformel $C_{13}H_{24}O_3$ einzeln oder im Gemisch. Da dem Glycidylrest im Glycidylester solcher $\alpha$-Alkylalkanmonocarbonsäuren und/oder $\alpha,\alpha$-Dialkylalkanmonocarbonsäuren die Summenformel $C_3H_5O$ zukommt, sind die $\alpha$-Alkylalkanmonocarbonsäuren und $\alpha,\alpha$-Dialkylalkanmonocarbonsäuren Isomerengemische von solchen Monocarbonsäuren, die eine $C_{10}$-Kette enthalten. Die Säuren sind dabei bevorzugt völlig gesättigt und am $\alpha$-ständigen Kohlenstoffatom sehr stark substituiert; Beispiele hierfür werden in "Deutsche Farbenzeitschrift", Heft 10/16. Jahrgang, Seite 435, beschrieben.

Die erfindungsgemäßen Bindemittel können zu klaren oder pigmentierten Überzugsmitteln verarbeitet werden. Hierzu werden sie in Lösungsmitteln mit gegebenenfalls lacküblichen Zusatz- und Hilfsstoffen mit einem üblichen Lack-Polyisocyanat versetzt. Dabei werden bevorzugt 60,0 bis 80,0 Gew.-% des hydroxylgruppenhaltigen Copolymerisats A) mit 20 bis 40 Gewichts-% zwei-und/oder mehrwertigem Polyisocyanat B) versetzt; die Summe der Komponenten A) und B) beträgt jeweils 100 %.

Die zur Vernetzung des erfindungsgemäßen Copolymerisats A) verwendbaren Polyisocyanate B) sind lacktypische Polyisocyanate.

Der Anteil an Polyisocyanat-Vernetzer wird so gewählt, daß auf eine Hydroxyl-Gruppe der Bindemittelmischung 0.5 bis 1.5 Isocyanat-Gruppen entfallen. Überschüssige Isocyanat-Gruppen können durch Feuchtigkeit abreagieren und zur Vernetzung beitragen.

Es können aliphatische, cycloaliphatische und aromatische Polyisocyanate verwendet werden wie Hexamethylendiisocyanat, Trimethylhexamethylendiisocyanat, Isophorondiisocyanat, 4,4'-Diisocyanatodicyclohexylmethan, Toluylen-2,4-Diisocyanat,o-,m- und p-Xylylendiisocyanat, 4,4'-Diisocyanatodiphenylmethan; verkappte Polyisocyanate, wie mit CH-, NH- oder OH-aciden Verbindungen verkappte Polyisocyanate; sowie z.B. Biuret-, Allophanat-, Urethan- oder Isocyanurat-Gruppen enthaltende Polyisocyanate. Beispiele für derartige Polyisocyanate sind ein Biuretgruppen enthaltendes Umsetzungsprodukt aus 3 Molen Hexamethylendiisocyanat mit 1 Mol Wasser mit einem NCO-Gehalt von ca. 22 % (entsprechend dem Handelsprodukt Desmodur N BAYER AG, eingetragenes Warenzeichen); ein Isocyanuratgruppen enthaltendes Polyisocyanat, das durch Trimerisierung von 3 Molen Hexamethylendiisocyanat hergestellt wird mit einem NCO-Gehalt von etwa 21,5 % (entsprechend dem Handelsprodukt Desmodur N 3390 BAYER AG, eingetragenes Warenzeichen) oder Urethangruppen enthaltende Polyisocyanate, welche Reaktionsprodukte darstellen aus 3 Molen Toluylendiisocyanat und 1 Mol Trimethylolpropan mit einem NCO-Gehalt von etwa 17,5 % (entsprechend dem Handelsprodukt Desmodur L BAYER AG, eingetragenes Warenzeichen).

Bevorzugt eingesetzt werden Desmodur N und Desmodur N 3390, BAYER AG, eingetragene Warenzeichen.

Aus den Komponenten A) und B) werden, wie vorstehend erwähnt, transparente oder pigmentierte Überzugsmittel hergestellt. Transparente Überzugsmittel finden z.B. Verwendung als Klarlacke in einer 2-Schicht-Lackierung, die sich zusammensetzt aus einer Pigmente enthaltenden Basisschicht und einer transparenten Deckschicht, die im Naß-in-Naß-Verfahren appliziert und anschließend entweder an der Luft oder in Einbrennöfen gehärtet werden. Diese Klarlacke enthalten neben üblichen Lösemitteln zur Einstellung der Spritzviskosität gegebenenfalls übliche Verlaufs- und Lichtschutzmittel, sowie andere übliche lacktechnische Zusatzstoffe.

Zur Herstellung pigmentierter Überzugsmittel werden die Einzelbestandteile miteinander vermischt und in üblicher Weise homogenisiert bzw. vermahlen. Beispielsweise kann so vorgegangen werden, daß zunächst ein Teil des Copolymerisats (A) mit gegebenenfalls vorhandenen Pigmenten und lacküblichen Hilfsstoffen und Lösemitteln vermischt und in Mahlaggregaten angerieben wird.

Danach wird das Mahlgut mit der restlichen Copolymerisat-Lösung komplettiert.

Die aus dem erfindungsgemäßen Bindemittel, das ein hydroxylgruppenhaltiges Copolymerisat darstellt, erhaltenen Überzugsmittel weisen den großen Vorteil eines hohen Festkörpergehalts bei relativ geringer Viskosität auf. Ihre Verlaufseigenschaften sind ausgezeichnet, und sie führen zu Überzügen mit ausgezeichnetem Glanz und hervorragender Fülle. Die erhaltenen Überzüge sind sehr rasch montagefest und können kurz nach dem Auftrag mit einem Klebeband abgeklebt werden, um beispielsweise eine Mehrfachlackierung zu ermöglichen. Die aus den erfindungsgemäßen Bindemitteln erhältlichen Überzugsmittel sind somit besonders in der Kraftfahrzeugindustrie zur Lackierung von Kraftfahrzeugkarossen, jedoch auch auf dem Reparatursektor zur raschen Ausbesserung von beispielsweise Unfallschäden geeignet. Die folgenden Beispiele dienen zur Erläuterung der Erfindung.

Die Herstellungs- und Vergleichsversuche I sind in Bezug auf die DE-OS-26 03 259 durchgeführt worden.

Die Herstellungs- und Vergleichsversuche II sind in Bezug auf die DE-OS-28 51 613 durchgeführt worden.

Herstellungs- und Vergleichsversuche I

Herstellung des Bindemittels (Komponente A)

In einen 4 l-Dreihals-Schliffkolben, der mit einem Rührwerk, Kontaktthermometer, Kugelkühler und Tropftrichter ausgerüstet ist, wird Bestandteil I entsprechend den Mengenangaben in der nachfolgenden Tabelle vorgelegt und unter Rühren bei eingeschalteter Rückflußkühlung auf 144° C geheizt.

Innerhalb von 6 Stunden wird Bestandteil II (Monomerengemisch und Initiator) kontinuierlich aus dem Tropftrichter zudosiert. Die Temperatur fällt gegen Ende der Zulaufzeit auf 139° C ab. Nach Zulaufende wird der Tropftrichter mit Bestandteil III nachgespült und zum Reaktionsgemisch hinzugefügt.

Anschließend wird 5 Stunden bei 139 bis 140° C nachpolymerisiert, so daß die Umsetzung 99 % ist.

Dann wird das Polymerisat auf 60° C abgekühlt und mit Bestandteil IV verdünnt.

Zu Vergleichszwecken wird ein weiteres Bindemittel nach der DE-PS 26 03 259 in gleicher Weise hergestellt; die Bestandteile sind ebenfalls der nachfolgenden Tabelle zu entnehmen.

In der nachfolgenden Tabelle sind auch die Eigenschaften der gemäß der vorliegenden Erfindung (Komponente A) sowie auch gemäß DE-PS 26 03 259 erhaltenen Bindemittel aufgeführt. Es ist ersichtlich, daß bei vergleichbarem Festkörpergehalt erfindungsgemäß eine wesentlich geringere Viskosität als nach dem Stand der Technik erzielt wird. Die erfindungsgemäßen Bindemittel eignen sich daher besonders für sogenannte High-Solid-Überzugsmittel.

T A B E L L E
(Einwaage in Gramm)

| Bestandteil: | | Komponente A) | Vergleich nach DE-PS 2603259 |
|---|---|---|---|
| I | Butylacetat | 110 | 110 |
| | Xylol | 290 | 290 |
| | Gemisch aromatischer Kohlenwasser-stoffe (Solvesso 100, eingetragenes Warenzeichen) | 186 | 186 |
| | Glycidylester (Cardura E 10, einge-tragenes Warenzeichen) | 160 | 281 |
| II | Styrol | 294 | 294 |
| | Methylmethacrylat | - | 219 |
| | tert. Butylacrylat | 144 | - |
| | iso-Butylmethacrylat | 62 | - |
| | 2-Ethylhexylmethacrylat | 80 | - |
| | Butandiol-1.4-monoacrylat | 124 | - |
| | 2-Hydroxypropylmethacrylat | 170 | - |
| | Hydroxyethylmethacrylat | - | 204 |
| | Acrylsäure | 48 | 84 |
| | Di-tert.-Butylperoxid | 18 | 18 |
| III | Xylol | 60 | 60 |
| IV | Butylacetat | 214 | 214 |
| | Xylol | 40 | 40 |
| Summe | | 2000 | 2000 |

Kennzahlen:

| | Komponente A) | Vergleich nach DE-PS 2603259 |
|---|---|---|
| Festkörper (%): | 54.9 | 54.8 |
| Viskosität (mPa.s b. 25°C): | 452 | 1387 |
| Säurezahl (bez.a.Festharz): | 9.9 | 6.1 |
| OH-Zahl (bez.a.Festharz): | 138 | 138 |

Herstellung eines Überzugsmittels unter Verwendung der Komponente A

In einen gereinigten trockenen Behälter werden 1.000 Gew.-Teile n-Butylacetat, 1.000 Gew.-Teile einer 10 %-igen Silikonöl-Lösung in Xylol, 5.000 Gew.-Teile Gemisch aromatische Kohlenwasserstoffe (SOLVESSO 100, eingetragenes Warenzeichen), 2.607 Gew.-Teile Xylol-Isomerengemisch, 0.750 Gew.-Teile Lichtschutzmittel vom Typ Benztriazol, 0.7500 Gew.-Teile Lichtschutzmittel von Typ H A L S (sterisch gehindertes Amin), 0.320 Gew.-Teile N,N Diethylethanolamin und 0.073 Gew.-Teile einer 10 %-igen Dibutyl-zinn-dilaurat-Lösung in Xylol vorgelegt und gründlich vermischt. Anschließend werden 88.500 Gew.-Teile des vorstehend hergestellten hydroxylgruppenhaltigen Copolymerisats (Bindemittel A) hinzugefügt und verrührt. Es resultiert ein Klarlack mit einem Festkörpergehalt von 50.3 % und einer Auslaufzeit im DIN A4-Becher von 80 Sekunden.

Als zweite Komponente (Komponente B) des Überzugsmittels wird ein Härter durch Vermischen folgender Bestandteile bereitet:

| | Gew.-Teile |
|---|---|
| Polyisocyanat auf der Basis von Hexamethylendiisocyanat | 40.00 |
| Butylglykolacetat | 14.00 |
| 3-Methoxy-n-butylacetat | 8.60 |
| n-Butylacetat | 26.10 |
| Gemisch aromatischer Kohlenwasserstoffe (SOLVESSO 100, eingetr. Warenzeichen) | 6.80 |
| Xylol | 4.50 |
| | 100.00 |

Herstellung eines Überzugsmittels unter Verwendung des vorstehend nach der DE-PS 26 03 259 hergestellten Bindemittels

In gleicher Weise wie vorstehend beschrieben wurde ein Überzugsmittel aus folgenden Bestandteilen hergestellt:

| | Gew.-% |
|---|---|
| Copolymersat, 55 %-ig (Vergleichsbeispiel gem. DE-PS 26 03 259, Zusammensetzung gemäß Tabelle 1) | 82.500 |
| N-Butylacetat | 1.300 |
| Silkonöl-Lösung, 10 %-ig in Xylol | 1.000 |
| Gemisch aromatischer Kohlenwasserstoffe (SOLVESSO 100m eingetr. Warenzeichen) | 7.927 |
| Xylol | 5.400 |
| Lichtschutzmittel vom Typ Benztriazol | 0.750 |
| Lichtschutzmittel vom Typ **HALS** | 0.750 |
| N.N'-Diethylethanolamin | 0.320 |
| Dibutyl-zinndilaurat-Lösung, 10 %-ig in Xylol | 0.053 |
| | 100.000 |

Die Bereitung des Härters erfolgte in gleicher Weise wie vorstehend für die Komponente B beschrieben.

Anwendung der erhaltenen Überzugsmittel

Die vorstehend bereiteten Bindemittel A bzw. Bindemittel gemäß DE-PS 26 03 259 enthaltenden Überzugsmittel wurden jeweils kurz vor der Verarbeitung im Gewichts-Mischungs-Verhältnis 2:1 mit dem vorstehenden Härter (Komponente B) vermischt.

Die erhaltenen Reaktionslacke, die beide eine Auslaufzeit im DIN A4-Becher von etwa 22 Sekunden hatten, wurden durch Spritzauftrag in einer Trockenfilmschichtdicke von 50 bis 60 $\mu$m im Naß-in-Naß-Verfahren auf eine Basislackschicht aufgebracht und nach einer Ablüftphase von 10 Minuten anschließend 30 Minuten bei 60°C gehärtet.

Ein Vergleich der beiden erhaltenen Überzüge zeigte eine deutliche Verbesserung von Glanz und Fülle (Bildung) des erfindungsgemäßen Überzugsmittels durch optische Beurteilung. Mit dem erfindungsgemäßen Überzugsmittel erhielt man eine gleichmäßige Schichtdickenverteilung an Kanten und Sikken; insbesondere an den Kanten trat keine Wulstbildung auf; eine derartige Wulstbildung war jedoch mit dem bekannten Überzugsmittel festzustellen. Der Verlauf war beim erfindungsgemäßen Überzugsmittel deutlich verbessert. Ebenfalls verbessert war die Abklebbarkeit des mit dem erfindungsgemäßen Überzugsmittel hergestellten Überzugs mit einem Klebeband zur Ermöglichung einer Mehrfachlackierung; beim Abziehen des Klebebandes blieben beim erfindungsgemäßen Überzugsmittel keine bleibenden Markierungen zurück. Der mit dem erfindungsgemäßen Überzugsmittels erhaltene Überzug war nach 1,5 Std., der mit dem bekannten Überzugsmittel erhaltene Überzug war erst nach 4 Std. montagefest. Das erfindungsgemäße Überzugsmittel erweist sich gegenüber dem Stand der Technik somit als rascher verarbeitbar bei deutlich verbesserten Überzugseigenschaften.

Herstellungs- und Vergleichsversuche II

Die Herstellung des erfindungsgemäßen Bindemittels Komponente A erfolgte wie bei dem Herstellungsversuch I.

Vergleichsversuch 1

(Beispiel 1 DE-OS 28 51 613)

In eine 4 Liter-Dreihalsschliffkolben, der mit einem Rührer, Rückflußkühler und Thermometer ausgestattet war, wurde ein Gemisch bestehend aus

| | |
|---|---|
| 522,9 g | Xylol |
| 266,8 g | Ethylglykolacetat |
| 275,7 g | Glycidylester einer $\alpha,\alpha'$-Dialkylalkanmonocarbonsäure (Epoxy-Äquivalentgewicht = 248) |
| 80,0 g | Acrylsäure |
| 5,3 g | Polypropylenglykolmonomethacrylat Molekulargewicht 350-387 |
| 17,1 g | Hydroxyethylmethacrylat |
| 26,7 g | Styrol |
| 26,7 g | Methylmethacrylat |
| 13,2 g | Dodecylmerkaptan |

unter Rückfluß bei 141° C 3 Stunden lang gehalten, bis eine Säurezahl von 16,4 mg KOH/g, bezogen auf die Menge der eingesetzten Monomeren, erreicht war.

Anschließend wurde ein Gemisch, bestehend aus

| | |
|---|---|
| 53,3 g | Propylenglykolmonomethacrylat Molekulargewicht 350-387 |
| 177,8 g | Hydroxyethylmethacrylat |
| 254,7 g | Styrol |
| 254,7 g | Methylmethacrylat |
| 13,2 g | di-tert.-Butylperoxid |
| 11,9 g | Dodecylmerkaptan |

innerhalb von 4 Stunden kontinuierlich aus einem Tropftrichter zudosiert. Dann wurde noch zusätzlich 3 Stunden durch Erhitzen unter Rückfluß copolymerisiert.

Es resultierte ein klare,gelblich gefärbte Polymerisat-Lösung mit einem Feststoffgehalt von 60,7% und einer Säurezahl von 7,0 mg KOH/g, bezogen auf Feststoffgehalt.

Nach Verdünnung mit Xylol auf 50%-Gewichtsprozent wurde eine Viskosität von 147 Sekunden gemessen (Auslaufbecher mit 4 mm Durchmesser der Auslaufdüse bei 20° C).

Vergleichsversuch 2

(Beispiel 4 DE-OS 28 51 613)

In einen 4 Liter-Dreihalsschliffkolben, der mit einem Rührer, Rückflußkühler und Thermometer ausgestattet war, wurde ein Gemisch bestehend aus

| | |
|---|---|
| 525,6 g | Xylol |
| 268,1 g | Ethylglykolacetat |
| 277,1 g | Glycidylester einer $\alpha,\alpha'$-Dialkylalkanmonocarbonsäure (Epoxy-Äquivalentgewicht = 248) |
| 80,4 g | Acrylsäure |
| 44,7 g | Styrol |
| 3,0 g | Dodecylmerkaptan |

unter Rückfluß bei 141° C 3 Stunden lang gehalten, bis eine Säurezahl von 17,1 mg KOH/g, bezogen auf

7

die Menge der eingesetzten Monomeren, erreicht war.
Anschließend wurde ein Gemisch, bestehend aus

| | |
|---|---|
| 254,9 g | Hydroxyethylmethacrylat |
| 238,2 g | Styrol |
| 282,8 g | Methylmethacrylat |
| 12,0 g | di-tert.-Butylperoxid |
| 13,2 g | Dodecylmerkaptan |

innerhalb von 4 Stunden kontinuierlich aus einem Tropftrichter zudosiert. Dann wurde noch zusätzlich 2,5 Stunden durch Erhitzen unter Rückfluß copolymerisiert.
Es resultierte ein klare,gelblich gefärbte Polymerisat-Lösung mit einem Feststoffgehalt von 60,8% und einer Säurezahl von 4,9 mg KOH/g, bezogen auf Feststoffgehalt.
Nach Verdünnung mit Xylol auf 50%-Gewichtsprozent wurde eine Viskosität von 566 Sekunden gemessen (Auslaufbecher mit 4 mm Durchmesser der Auslaufdüse bei 20°C).

Vergleichsversuch 3

(Anspruch 6 DE-OS 28 51 613)

In einen 4 Liter-Dreihalsschliffkolben, der mit einem Rührer, Rückflußkühler und Thermometer ausgestattet war, wurde ein Gemisch bestehend aus

| | |
|---|---|
| 494 g | Xylol |
| 266 g | Ethylglykolacetat |
| 322 g | Glycidylester einer $\alpha,\alpha'$-Dialkylalkanmonocarbonsäure (Epoxy-Äquivalentgewicht = 248) |
| 101 g | Acrylsäure |
| 6 g | Butylmethacrylat |
| 12 g | Isobutylmethacrylat |
| 12 g | Styrol |
| 19 g | Butylacrylat |
| 27 g | Butandiolmonoacrylat |

unter Rückfluß bei 142°C 3 Stunden lang gehalten.
Anschließend wurde ein Gemisch, bestehend aus

| | |
|---|---|
| 56 g | Butylmethacrylat |
| 112 g | Isobutylmethacrylat |
| 112 g | Styrol |
| 187 g | Butylacrylat |
| 260 g | Butandiolmonoacrylat |
| 14 g | di-tert.-Butylperoxid |

innerhalb von 4 Stunden kontinuierlich aus einem Tropftrichter zudosiert. Dann wurde noch zusätzlich 3 Stunden durch Erhitzen unter Rückfluß copolymerisiert.
Es resultierte ein klare,gelblich gefärbte Polymerisat-Lösung mit einem Feststoffgehalt von 62,2% und einer Säurezahl von 8,2 mg KOH/g, bezogen auf Feststoffgehalt.
Nach Verdünnung mit Xylol auf 50%-Gewichtsprozent wurde eine Viskosität von 118 Sekunden gemessen (Auslaufbecher mit 4 mm Durchmesser der Auslaufdüse bei 20°C).

Vergleichsversuch 4

(Anspruch 6 DE-OS 28 51 613)

In einen 4 Liter-Dreihalsschliffkolben, der mit einem Rührer, Rückflußkühler und Thermometer ausgestattet war, wurde ein Gemisch bestehend aus

| | |
|---|---|
| 494 g | Xylol |
| 266 g | Ethylglykolacetat |
| 112 g | Glycidylester einer α,α'-Dialkylalkanmonocarbonsäure (Epoxy-Äquivalentgewicht = 248) |
| 40 g | Acrylsäure |
| 6 g | Butylmethacrylat |
| 12 g | Isobutylmethacrylat |
| 12 g | Styrol |
| 66 g | Butylacrylat |
| 5 g | Butandiolmonoacrylat |

unter Rückfluß bei 139° C 3 Stunden lang gehalten.

Anschließend wurde ein Gemisch, bestehend aus

| | |
|---|---|
| 56 g | Butylmethacrylat |
| 112 g | Isobutylmethacrylat |
| 112 g | Styrol |
| 649 g | Butylacrylat |
| 46 g | Butandiolmonoacrylat |
| 12 g | di-tert.-Butylperoxid |

innerhalb von 4 Stunden kontinuierlich aus einem Tropftrichter zudosiert. Dann wurde noch zusätzlich 3 Stunden durch Erhitzen unter Rückfluß copolymerisiert.

Es resultierte ein klare,fast farblose Polymerisat-Lösung mit einem Feststoffgehalt von 62,0% und einer Säurezahl von 7,4 mg KOH/g, bezogen auf Feststoffgehalt.

Nach Verdünnung mit Xylol auf 50%-Gewichtsprozent wurde eine Viskosität von 21 Sekunden gemessen (Auslaufbecher mit 4 mm Durchmesser der Auslaufdüse bei 20° C).

Herstellung der Klarlacke unter Verwendung des erfindungsgemäßen Copolymerisats (Komponente A) und der Bindemittel-Komponenten aus den Vergleichsversuchen 1 bis 4)

1. Klarlack mit erfindungsgemäßem Copolymerisat (Komponente A)

In einen gereinigten trocknen Behälter werden 1,000 Gew.-Teile n-Butylacetat, 1,000 Gew.-Teile einer 10%igen Silikonöl-Lösung in Xylol, 5,000 Gew.-Teile SOLVESSO 100®, 2,607 Gew.-Teile Xylol-Isomerengemisch, 0,750 Gew.-Teile Lichtschutzmittel vom Typ BENZTRIAZOL, 0,7500 Gew.-Teile Lichtschutzmittel vom Typ H A L S, 0,320 Gew.-Teile N,N'-Diethylethanolamin und 0,073 Gew.-Teile einer 10%igen Dibutylzinn-dilaurat-Lösung in Xylol vorgelegt und gründlich vermischt. Anschließend werden 80,500 Gew.-Teile des erfindungsgemäß hergestellten hydroxylgruppenhaltigen Copolymerisats (55 % Festkörpergehalt) (Komponente A) und 8,000 Gew.-Teile Xylol Isomerengemisch hinzugefügt und verrührt. Es resultiert ein Klarlack mit einer Auslaufzeit von 77 Sekunden (Auslaufbecher mit 4 mm Durchmesser der Auslaufdüse bei 20° C).

2. Klarlack mit dem Copolymerisat aus Vergleichsversuch 1

In einen gereinigten trocknen Behälter werden 1,000 Gew.-Teile n-Butylacetat, 1,000 Gew.-Teile einer 10%igen Silikonöl-Lösung in Xylol, 5,000 Gew.-Teile SOLVESSO 100®, 2,607 Gew.-Teile Xylol-Isomerengemisch, 0,750 Gew.-Teile Lichtschutzmittel vom Typ BENZTRIAZOL, 0,7500 Gew-Teile Lichtschutzmittel vom Typ H A L S, 0,320 Gew.-Teile N,N'-Diethylethanolamin und 0,073 Gew.-Teile einer 10%igen Dibutylzinn-dilaurat-Lösung in Xylol vorgelegt und gründlich vermischt. Anschließend werden 88,500 Gew.-Teile des Copolymersats aus Vergleichsversuch 1 hinzugefügt und verrührt. Es resultiert ein Klarlack mit einer Auslaufzeit von 75 Sekunden (Auslaufbecher mit 4 mm Durchmesser der Auslaufdüse bei 20° C).

3. Klarlack mit dem Copolymerisat aus Vergleichsversuch 2

In einen gereinigten trocknen Behälter werden 1,000 Gew.-Teile n-Butylacetat, 1,000 Gew.-Teile einer 10%igen Silikonöl-Lösung in Xylol, 5,000 Gew.-Teile SOLVESSO 100®, 2,607 Gew.-Teile Xylol-Isomerengemisch, 0,750 Gew.-Teile Lichtschutzmittel vom Typ BENZTRIAZOL, 0,7500 Gew.-Teile Lichtschutzmittel vom Typ H A L S, 0,320 Gew.-Teile N,N'-Diethylethanolamin und 0,073 Gew.-Teile einer 10%igen Dibutylzinn-dilaurat-Lösung in Xylol vorgelegt und gründlich vermischt. Anschließend werden 88,500 Gew.-Teile des Copolymersats aus Vergleichsversuch 2 hinzugefügt und verrührt. Es resultiert ein Klarlack mit einer Auslaufzeit von 320 Sekunden (Auslaufbecher mit 4 mm Durchmesser der Auslaufdüse bei 20° C).

4. Klarlack mit dem Copolymerisat aus Vergleichsversuch 3

In einen gereinigten trocknen Behälter werden 1,000 Gew.-Teile n-Butylacetat, 1,000 Gew.-Teile einer 10%igen Silikonöl-Lösung in Xylol, 5,000 Gew.-Teile SOLVESSO 100®, 2,607 Gew.-Teile Xylol-Isomerengemisch, 0,750 Gew.-Teile Lichtschutzmittel vom Typ BENZTRIAZOL, 0,7500 Gew.-Teile Lichtschutzmittel vom Typ H A L S, 0,320 Gew.-Teile N,N'-Diethylethanolamin und 0,073 Gew.-Teile einer 10%igen Dibutylzinn-dilaurat-Lösung in Xylol vorgelegt und gründlich vermischt. Anschließend werden 88,500 Gew.-Teile des Copolymersats aus Vergleichsversuch 3 hinzugefügt und verrührt. Es resultiert ein Klarlack mit einer Auslaufzeit von 33 Sekunden (Auslaufbecher mit 4 mm Durchmesser der Auslaufdüse bei 20° C).

5. Klarlack mit dem Copolymerisat aus Vergleichsversuch 4

In einen gereinigten trocknen Behälter werden 1,000 Gew.-Teile n-Butylacetat, 1,000 Gew.-Teile einer 10%igen Silikonöl-Lösung in Xylol, 5,000 Gew.-Teile SOLVESSO 100®, 2,607 Gew.-Teile Xylol-Isomerengemisch, 0,750 Gew.-Teile Lichtschutzmittel vom Typ BENZTRIAZOL, 0,7500 Gew.-Teile Lichtschutzmittel vom Typ H A L S, 0,320 Gew.-Teile N,N'-Diethylethanolamin und 0,073 Gew.-Teile einer 10%igen Dibutylzinn-dilaurat-Lösung in Xylol vorgelegt und gründlich vermischt. Anschließend werden 88,500 Gew.-Teile des Copolymersats aus Vergleichsversuch 4 hinzugefügt und verrührt. Es resultiert ein Klarlack mit einer Auslaufzeit von 17 Sekunden (Auslaufbecher mit 4 mm Durchmesser der Auslaufdüse bei 20° C).

Da die Klarlacke unter Verwendung der Copolymerisate aus den Vergleichsversuchen 3 und 4 jeweils eine zu niedrige Viskosität (Auslaufzeit: 33 bzw. 17 Sekunden) aufwiesen und somit lacktechnisch nicht applizierbar und im Rahmen der Vergleichsversuche nicht zu verwenden sind, wurden aus den jeweiligen Rezepturen 4. und 5. alle Lösungsmittel (n-Butylacetat, SOLVESSO 100, Xylol) herausgelassen, um die jeweiligen Viskositäten zu erhöhen. Die dabei erhaltenen Werte für die jeweilige Auslaufzeit betrugen 53 bzw. 20 Sekunden.

Herstellung der Härter-Lösung

Als zweite Komponente (Komponente B) des Überzugsmittels wurde folgender Härter bereitet:

|  | Gew.-Teile: |
| --- | --- |
| Polyisocyanat auf der Basis von Hexamethylendiisocyanat |  |
| DESMODUR N/75 MX ® | 44,00 |
| Butylglykolacetat | 2,00 |
| Xylol-Isomerengemisch | 9,00 |
| n-Butylacetat | 15,80 |
| SOLVESSO 110 ® | 29,20 |
|  | 100,00 |

Anwendung der erhaltenen Überzugsmittel

Die die vorstehend bereiteten Bindemittel A bzw. Bindemittel gemäß den Vergleichsversuchen 1 bis 4 enthaltenen Überzugsmittel bzw. Klarlacke wurden jeweils kurz vor der Verarbeitung im Gewichts-Mischungs-Verhältnis 2 : 1 mit dem vorstehenden Härter (Komponente B) des Überzugsmittels vermischt.

Die erhaltenen Reaktionslacke wurden durch Spritzauftrag in einer Trockenfilmschichtdicke von 50 bis 60 μm im Naß-in-Naß-Verfahren auf eine Basislackschicht aufgebracht und nach einer Ablüftphase von 10 Minuten anschließend 30 Minuten bei 60° C gehärtet. Die Ergebnisse der lacktechnischen Untersuchungen sind in der nachfolgenden Tabelle gezeigt. Dabei sind die Ergebnisse der lacktechnischen Untersuchungen der Überzugsmittel unter Verwendung der Bindemittel aus den Vergleichsversuchen 3 und 4 mit den jeweiligen Klarlacken, die zur Erhöhung der Viskositäten ohne die zusätzlichen Lösungsmittel hergestellt worden waren, durchgeführt worden.

Tabelle

| lacktechnische Untersuchungen lacktechnische Vergleichsversuche unter Verwendung von Bindemittel | aus Vergleichsversuchen | | | | Komponente A |
|---|---|---|---|---|---|
| | 1 | 2 | 3 | 4 | Komponente A |
| Auslaufzeit [s] (Ausmischung nach Rezeptur | 75 | 320 | 33 | 17 | 77 |
| Auslaufzeit [s] (ohne zusätzl. Lösemittel | | | 53 | 20 | |
| Lufttrocknung: | | | | | |
| Kleber (16h) | + | + | - | -- | + |
| Fülle/Glanz | + | + | -- | - | ( + ) |
| Verlauf | + | ( + ) | -- | - | + |
| Ofentrocknung: | | | | | |
| 20 Min. | ( + ) | + | - | -- | ( + ) |
| 30 Min. | + | + | - | -- | + |
| Härte | - | - | -- | --- | + |
| Fülle/Glanz | + | + | - | + | + |
| Verlauf | + | + | - | + | + |
| Abdeckprobe | - | + | - | - | + |
| Laufneigung (Sicke,Wulst) | + | + | - | -- | + |
| Erläuterungen: | | | | | |

+ : sehr gut

( + ): befriedigend

- : schlecht

--: sehr schlecht

---: äußerst schlecht

Die Ergebnisse der lacktechnischen Untersuchungen zeigen deutlich, daß der unter Verwendung des erfindungsgemäßen Bindemittels hergestellte Überzug den unter Verwendung der Bindemittel aus den Vergleichsversuchen 1 bis 4 hergestellten Überzügen überlegen ist. Das erfindungsgemäße Überzugsmittel erweist sich gegenüber den nach dem Stand der Technik unter Verwendung der Bindemittel aus den Vergleichsversuchen 1 bis 4 hergestellten Überzügen in Bezug auf die Abdeckprobe und insbesondere in Bezug auf die Härte des Überzuges als überlegen. Die Verwendung der erfindungsgemäßen Bindemittel-Komponente A ermöglicht die Herstellung von sowohl medium-solid, als auch high-solid-Überzugsmitteln, wohingegen bei Verwendung der Bindemittel aus Vergleichsversuch 2, womit - wie in der Tabelle ersichtlich - die von den Vergleichsversuchen 1 bis 4 besten Ergebnisse der lacktechnischen Untersuchungen erzielt werden, keine medium-solid-Überzugsmittel hergestellt werden können und der Anwendungsbereich dadurch eingeschränkt wird.

**Patentansprüche**

1.  Bindemittel, geeignet für klare oder pigmentierte Überzugsmittel, enthaltend ein hydroxylgruppenhaltiges Copolyperisat auf der Basis von Additionsprodukten $\alpha,\beta$-ungesättigter Säuren und Glycidylester und damit mischpolymerisierbarer $\alpha,\beta$-ungesättigter Monomerer mit und ohne Hydroxylgruppen, **dadurch gekennzeichnet,** daß das Bindemittel im wesentlichen aus einem hydroxylgruppenhaltigen Copolymerisat besteht, das erhältlich ist aus
    a) 24.5 bis 30.0 Gew.-% Styrol,

b) 12.0 bis 15.0 Gew.-% tert.-Butylacrylat,

c) 4.0 bis 7.0 Gew. % iso-Butylmethacrylat,

d) 6.0 bis 9.0 Gew.-% 2-Ethylhexylmethacrylat,

e) 14.0 bis 17.0 Gew.-% 2-Hydroxypropylmethacrylat,

f) 10.0 bis 13.0 Gew.-% Butandiol-1,4-monoacrylat,

g) 4.0 bis 5.0 Gew.-% Acrylsäure,

h) 13.0 bis 15.5 Gew.-% Glycidylester von α-Alkylalkan-monocarbonsäuren und/oder α,α-Dialkylalkanmonocarbonsäuren,

wobei die Summe der Komponenten a) bis h) jeweils 100 % beträgt.

2. Verfahren zur Herstellung des als Bindemittel verwendbaren hydroxylgruppenhaltigen Copolymerisats nach Anspruch 1, durch Erwärmen von α,β-ungesättigten Säuren, Glycidylestern und damit mischpolymerisierbaren α,β-ungesättigten Monomeren mit und ohne Hydroxylgruppen in Anwesenheit von Polymerisationsinitiatoren, gegebenenfalls organischen Lösungsmitteln und gegebenenfalls Kettenüberträgern, dadurch gekennzeichnet, daß ein Gemisch, im wesentlichen bestehend aus

a) 24.5 bis 30.0 Gew.-% Styrol,

b) 12.0 bis 15.0 Gew.-% tert.-Butylacrylat,

c) 4.0 bis 7.0 Gew.-% iso-Butylmethacrylat,

d) 6.0 bis 9.0 Gew.-% 2-Ethylhexylmethacrylat,

e) 14.0 bis 17.0 Gew.-% 2-Hydroxypropylmethacrylat,

f) 10.0 bis 13.0 Gew.-% Butandiol-1,4-monoacrylat,

g) 4.0 bis 5.0 Gew.-% Acrylsäure,

h) 13.0 bis 15.5 Gew.-% Glycidylester von α-Alyklalkanmonocarbonsäuren und/oder α,α-Dialkylalkanmonocarbonsäuren

umgesetzt wird.

3. Verwendung des Bindemittels nach Anspruch 1, in klaren oder pigmentierten Überzugsmitteln, wobei das Bindemittel in Mengen von 60 bis 80 Gew.-% als Komponente A) zusammen mit 20 bis 40 Gew.-% zwei-und/oder mehrwertigem Polyisocyanat als Komponente B) eingesetzt wird und die Summe der Komponenten A) und B) jeweils 100 % beträgt.

## Claims

1. A binder suitable for clear or pigmented coatings, containing a hydroxyl-group-containing copolymer based on addition products of α,β-unsaturated acids and glycidyl esters and, copolymerizable therewith, a,β-unsaturated monomers with and without hydroxyl groups, characterized in that the binder consists essentially of a hydroxyl-group-containing copolymer which is obtainable from

a) 24.5 to 30.0 % by weight styrene,

b) 12.0 to 15.0 % by weight tert-butyl acrylate,

c) 4.0 to 7.0 % by weight isobutyl methacrylate,

d) 6.0 to 9.0 % by weight 2-ethylhexyl methacrylate,

e) 14.0 to 17.0 % by weight 2-hydroxypropyl methacrylate,

f) 10.0 to 13.0 % by weight 1,4-butanediol monoacrylate,

g) 4.0 to 5.0 % by weight acrylic acid, and

h) 13.0 to 15.5 % by weight glycidyl esters of α-alkylalkane monocarboxylic acids and/or α,α-dialkylalkane monocarboxylic acids,

the sum of components a) to h) amounting to 100 % in each case.

2. A process for manufacturing the hydroxyl-group-containing copolymer usable as a binder according to Claim 1 by heating a,β-unsaturated acids and glycidyl esters and, copolymerizable therewith, a,β-unsaturated monomers with and without hydroxyl groups in presence of polymerization initiators, optionally organic solvents and optionally chain transfer agents, characterized in that a mixture essentially consisting of

a) 24.5 to 30.0 % by weight styrene,

b) 12.0 to 15.0 % by weight tert-butyl acrylate,

c) 4.0 to 7.0 % by weight isobutyl methacrylate,

d) 6.0 to 9.0 % by weight 2-ethylhexyl methacrylate,

e) 14.0 to 17.0 % by weight 2-hydroxypropyl methacrylate,

f) 10.0 to 13.0 % by weight 1,4-butanediol monoacrylate,

g) 4.0 to 5.0 % by weight acrylic acid,

h) 13.0 to 15.5 % by weight glycidyl esters of $\alpha$-alkylalkane monocarboxylic acids and/or $\alpha,\alpha$-dialkylalkane monocarboxylic acids

is reacted.

3. Use of the binder according to Claim 1 in clear or pigmented coatings, the binder being used in amounts of 60 to 80 % by weight as component A) together with 20 to 40 % by weight of bivalent and/or polyvalent polyisocyanate as component B) and the sum of components A) and B) being 100 % in each case.

**Revendications**

1. Liant approprié pour les produits de revêtement clairs ou pigmentés, contenant un copolymère contenant des groupes hydroxyle à base de produits d'addition d'acides et de glycidylesters $\alpha,\beta$-insaturés et de monomères avec et sans groupes hydroxyle $\alpha,\beta$-insaturés polymérisables avec eux, caractérisé en ce que le liant se compose pour l'essentiel d'un copolymère contenant des groupes hydroxyle, que l'on obtient à partir de

a) 24,5 à 30,0 % en poids de styrène,

b) 12,0 à 15,0 % en poids d'acrylate de tert.-butyle

c) 4,0 à 7,0 % en poids de méthacrylate d'isobutyle

d) 6,0 à 9,0 % en poids de méthacrylate de 2-éthylhexyle

e) 14,0 à 17,0 % en poids de méthacrylate de 2-hydroxypropyle

f) 10,0 à 13,0 % en poids de 1,4-monoacrylate de butanediol

g) 4,0 à 5,0 % en poids d'acide acrylique,

h) 13,0 à 15,0 % en poids de glycidylester d'acides $\alpha$-alcoylalcanemonocarboxyliques et.ou d'acides $\alpha,\alpha$-dialcoylalcanemonocarboxyliques,

où la somme des composants a) à h) s'élève à chaque fois à 100%.

2. Procédé de préparation du copolymère contenant les groupes hydroxyles utilisable comme liant selon la revendication 1, par chauffage d'acides $\alpha,\beta$-insaturés, de glycidylesters et de monomères $\alpha,\beta$-insaturés avec et sans groupes hydroxyles polymérisables avec eux, en présence d'inducteurs de polymérisation, éventuellement de solvants organiques et éventuellement des agents de transfert de chaînes, caractérisé en ce qu'on fait réagir un mélange, constitué pour l'essentiel de

a) 24,5 à 30,0 % en poids de styrène,

b) 12,0 à 15,0 % en poids d'acrylate de tert.-butyle,

c) 4,0 à 7,0 % en poids de méthacrylate d'isobutyle,

d) 6,0 à 9,0 % en poids de méthacrylate de 2-éthyl-hexyle,

e) 14,0 à 17,0 % en poids de méthacrylate de 2-hydroxypropyle,

f) 10,0 à 13,0 % en poids de 1,4-monoacrylate de butanediol,

g) 4,0 à 5,0 % en poids d'acide acrylique,

h) 13,0 à 15,5 % en poids de glycidylester d'acides $\alpha$-alcoylalcanemonocarboxyliques et/ou d'acides $\alpha,\alpha$-dialcoylalcanemonocarboxyliques.

3. Application du liant selon la revendication 1, dans des revêtements clairs ou pigmentés, où le liant est utilisé à des quantités de 60 à 80% en poids comme composant A) avec 20 à 40% en poids de polyisocyanate bi- et/ou polyvalent comme composant B) et où la somme des composants A) et B) s'élève à chaque fois à 100%.